# EUROPEAN PATENT APPLICATION

(11) **EP 1 255 185 A1**
(43) Date of publication of application: **06.11.2002**
(21) Application number: 01904329.8
(22) Date of filing: 07.02.2001
(51) Int. Cl.: G06F 3/03, G06F 15/02, H04M 1/00

(54) **PORTABLE TERMINAL**

(30) Priority: 08.02.2000 JP 2000030080
(71) Applicant: MATSUSHITA ELECTRIC INDUSTRIAL CO., LTD., Kadoma-shi, Osaka 571-8501 (JP)
(72) Inventor: YAMAZAKI, Osamu, Toyonaka-shi, Osaka 565-0085 (JP); YAMAMOTO, Nobutane, Tokyo 154-0023 (JP)
(74) Representative: Grünecker, Kinkeldey, Stockmair & Schwanhäusser Anwaltssozietät
(86) International application number: JP0100849
(87) International publication number: WO01059554

(57) **Abstract**

A mobile telephone is provided, that is easy to manipulate manually and can perform electric authentication and input a character by providing an additional value to a conventional mobile telephone.

A mobile telephone 1 is disposed which communicates information, and as motion detecting means which detects all or some of movement of the main body of the mobile telephone 1, a CCD 40, a camera 50 and the like are disposed.

## Description

### TECHNICAL FIELD

The present invention relates to a portable terminal which is typically a mobile telephone, and more particularly, to a portable terminal which allows a simple inputting operation, and also to a portable terminal which makes it possible to input information even through an action such as handwriting and a signature authentication method which uses such a portable terminal.

### BACKGROUND ART

There comes a demand for inputting handwritten characters using a portable information terminal, when electronic signature authentication for example is desired.

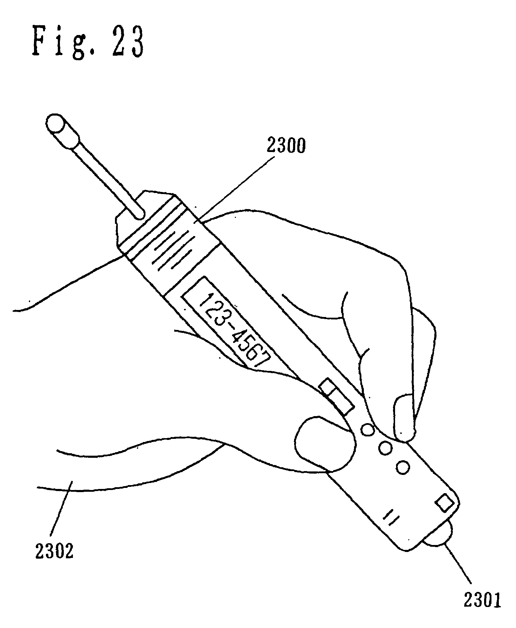

Fig. 23 shows a mobile telephone which has a conventional function of inputting handwritten characters (Japanese Patent Laid-Open Application No. H10-214157).

In this conventional example, using a drag ball 2301 as inputting means of a mobile telephone 2300, the trace of writing with the mobile telephone 2300 by a hand 2302 of a user is detected as rotations of the drag ball 2301, and a character, a telephone number or the like is inputted.

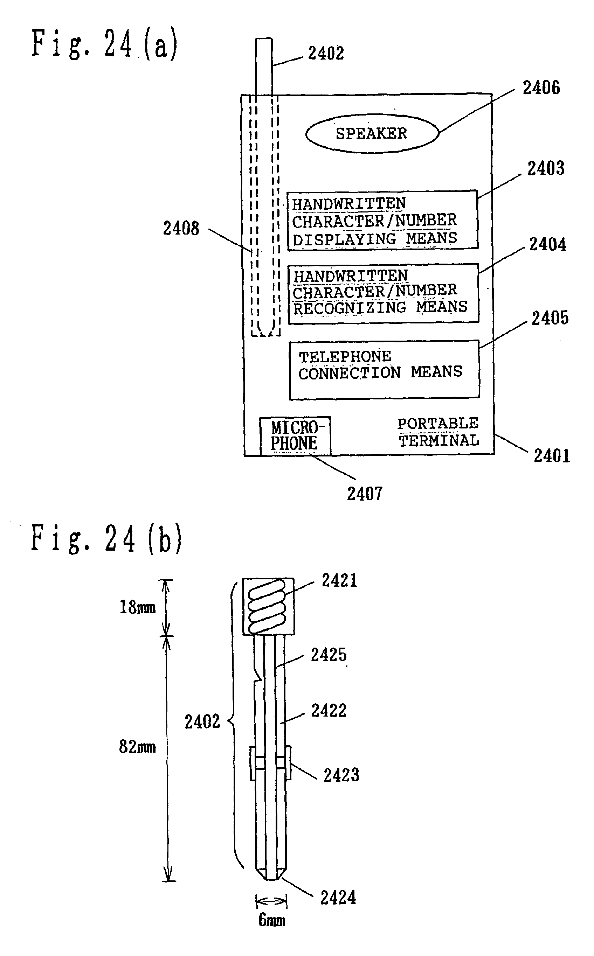

Meanwhile, the example shown in Figs. 24(a) and (b) is a proposal to equip a normal portable telephone 2401 with character/number recognizing means 2404 which serves as a character inputting pad for the purpose of inputting characters, and to input a handwritten character using an antenna/inputting pen 2402 which is shown in Fig. 24(b) (Japanese Patent Laid-Open Application No. H7-336759).

However, a telephone like the conventional example shown in Fig. 23 is not widely used.

The reason is the special shape which requires an extraordinary production cost, and the particular application which is not easily accepted by consumers.

Further, although the conventional example shown in Fig. 24 is relatively easily manufactured and used, the pen 2402 to input a character for this conventional mobile telephone is very small, and therefore, a very detailed operation is necessary to input a character and the inputting job is not simple.

In addition, since the pen 2402 of inputting a character is detachable from the main body of the portable telephone 2401, there is a problem that if one loses the inputting pen 2402 during the inputting job or after putting the pen into a pocket, one can not perform the inputting job.

### SUMMARY OF THE INVENTION

The present invention aims at solving such problems, and providing a mobile telephone which allows an electronic authentication job and character entry which have been heretofore impossible, by permitting a very easy inputting job and providing an additional value to a conventional mobile telephone.

To achieve the above object, the 1st invention of the present invention is a portable terminal, comprising:
a portable terminal main body which communicates information; and
motion detecting means which detects all or some of movement of said portable terminal main body.

The 2nd invention of the present invention is the portable terminal of the 1st invention, wherein said motion detecting means comprises image detecting means,
and that said movement is detected based on an image detected by said image detecting means.

The 3rd invention of the present invention is the portable terminal of the 2nd invention, wherein said motion detecting means detects said movement based on a motion vector of the image detected by said image detecting means.

The 4th invention of the present invention is the portable terminal of the 1st invention, wherein said motion detecting means comprises pressure detecting means,
and that said movement is detected based on pressure which is applied upon the entirety or a part of said portable terminal main body and which is detected by said pressure detecting means.

The 5th invention of the present invention is the portable terminal of the 1st invention, wherein said motion detecting means comprises a gyro.

The 6th invention of the present invention is the portable terminal of any one of the 1st through 5th inventions, comprising recognizing means which recognizes, as data representing a character or graphic form, all or some of movement of said portable terminal main body detected by said motion detecting means.

The 7th invention of the present invention is the portable terminal of any one of the 1st through 5th inventions, wherein said part of said portable terminal main body is an antenna portion of said portable terminal.

The 8th invention of the present invention is the portable terminal of any one of the 1st through 5th inventions, comprising a writing portion which is disposed to said part of said portable terminal main body and which writes a character or graphic form.

The 9th invention of the present invention is the portable terminal of any one of the 1st through 5th inventions, wherein all or some of movement of said portable terminal main body is a writing action of a user of said portable terminal.

The 10th invention of the present invention is the portable terminal of any one of the 1st through 5th inventions, wherein said portable terminal is all or some of a telephone, a remote controller and an information processing apparatus.

The 11th invention of the present invention is a signature authentication method characterized in using, as a signature for authentication, a character or character data obtained through all or some of movement of said portable terminal main body of said portable terminal of the 9th invention.

The 12th invention of the present invention is a program which makes a computer function as all or some of motion detecting means, which detects all or some of movement of said portable terminal main body of said portable terminal of any one of the 1st through 6th inventions, and recognizing means which recognizes, as data representing a character or graphic form, all or some of movement of said portable terminal main body.

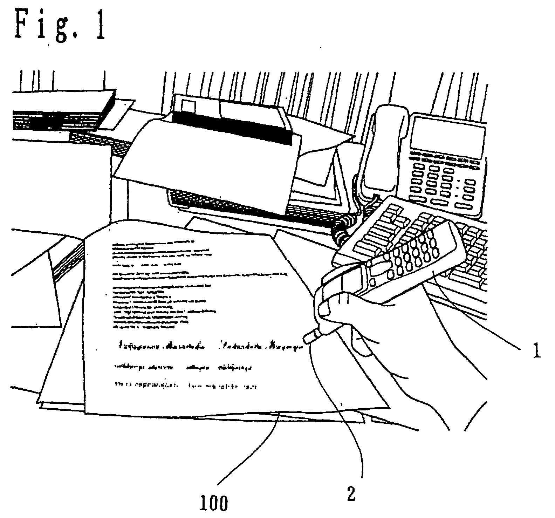

As one example, the invention described above is directed to a mobile telephone which is characterized in that it is held upside down conversely to how it would be held to talk, so that one makes an action of writing while using a tip end of an antenna as a neb and the behavior of the writing action is detected (See Fig. 1 for instance.).

Further, the mobile telephone uses image inputting means which uses a CCD, a photodiode or the like for detection of the behavior at that stage,
and as the means of detecting the behavior, the mobile telephone uses a three-dimensional pressure sensor which detects a behavior of the neb.

Still further, when one uses this mobile telephone, one may hold the mobile telephone upside down (conversely to how one would hold the mobile telephone to talk) and make a writing action viewing a tip end of an antenna as a neb (or using the tip end as a neb), so that the behavior of the writing action of the neb is detected and used as an authentication signature.

Moreover, when one uses a similar mobile telephone, one may hold the mobile telephone upside down (conversely to how one would hold the mobile telephone to talk) and make a writing action as if a tip end of an antenna was a neb (or using the tip end as a neb), so that the behavior of the writing action of the neb is detected and a character is inputted utilizing the behavior of the writing action.

### BRIEF DESCRIPTION OF THE DRAWINGS

Fig. 1 is a drawing which shows an example of use regarding embodiments of the present invention;
Fig. 2 is a drawing which shows a mobile telephone according to the embodiments of the present invention;
Fig. 3 is a drawing which shows an operation according to the embodiments of the present invention;
Fig. 4 is a drawing which shows a structure according to the embodiments of the present invention;
Fig. 5 is a block structure diagram which shows a first embodiment of the present invention;
Fig. 6 is an appearance view of the embodiments of the present invention;
Fig. 7 is a partial structure view of a second embodiment of the present invention;
Fig. 8 is a block structure diagram of the second embodiment of the present invention;
Fig. 9 is a block structure diagram of a third embodiment of the present invention;
Fig. 10 is a block structure diagram of a fourth embodiment of the present invention;
Fig. 11 is a drawing which shows an operation according to the embodiments of the present invention;
Fig. 12 is a drawing which shows an operation according to the embodiments of the present invention;
Fig. 13 is a drawing which shows an operation according to the embodiments of the present invention;
Fig. 14 is a drawing which shows an operation according to the embodiments of the present invention;
Fig. 15 is a drawing which shows an operation according to the embodiments of the present invention;
Fig. 16 is a drawing which shows an operation according to the embodiments of the present invention;
Fig. 17 is a drawing which shows an operation according to the embodiments of the present invention;
Fig. 18 is a block structure diagram which shows the embodiments of the present invention;
Fig. 19 is a drawing which shows an operation according to the embodiments of the present invention;
Fig. 20 is a drawing which shows an operation according to the embodiments of the present invention;
Fig. 21 is a drawing which shows an operation according to the embodiments of the present invention;
Fig. 22 is a drawing which shows an operation according to the embodiments of the present invention;
Fig. 23 is a drawing which shows a conventional portable telephone; and
Fig. 24 is a drawing which shows a conventional portable telephone.

### EXPLANATION OF THE REFERENCE SYMBOLS

- 1: mobile telephone
- 2: antenna
- 3: image display part
- 6: speaker
- 7: microphone
- 10: numerical keys
- 11: key input control part
- 21: cap
- 23': string
- 25: camera part
- 27: ball-point pen
- 28a, 8b: screw part
- 29: neb
- 31: display driving part
- 40: CCD
- 41: reading control part
- 50: lens
- 51: lens control part
- 52: sending/receiving unit
- 53: CPU
- 58: personal handwriting memory part
- 59: handwriting matching part
- 60: handwriting characteristic quantity extracting part
61 speaker control part
62 handwriting data memory part
63 VRAM
64 ROM
65 battery
66 battery control part
72 writing control part
92 finger pressure detecting sensor
100 data/power line
161 speaker control part
701 pressure sensor
702 neb movement detection member
702a branch (blade spring) part of neb movement detection member
703 writing force sensor
2401 drag ball

### BEST MODE TO IMPLEMENT THE INVENTION

Structures and operations according to embodiments of the present invention will now be described in detail.

### (First Embodiment)

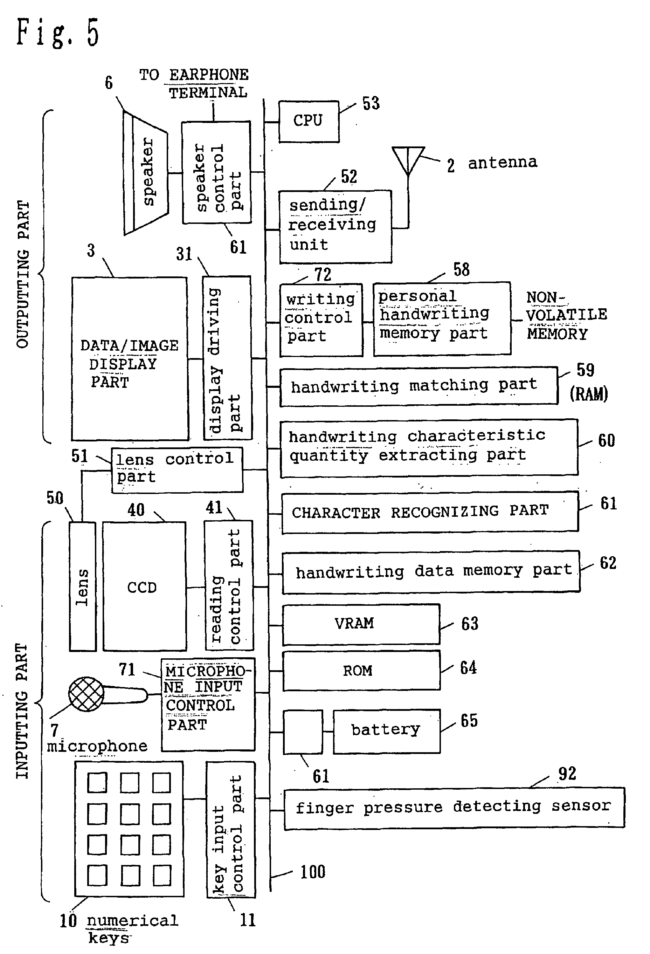

Fig. 5 is a structure diagram of major components of a mobile telephone according to a first embodiment of the present invention, and in a mobile telephone 1, denoted at 51 is a speaker of outputting sound information such as speech and music, denoted at 52 is a speaker control part of outputting a sound signal to the speaker, which comprises an amplifier of amplifying a speech signal, an output switching function to an earphone terminal, etc.

Denoted at 53 is a CPU which governs overall operations of the mobile telephone 1 and is connected to the respective units through a signal line 100 which is disposed within the mobile telephone. The signal line 100 permits inputting and outputting of a signal to and from the respective structure elements, supplies power source to the respective units, and when power generation means such as a solar battery is connected to the signal line, serves as a power line so as to charge up a battery 65 with generated electric power.

Denoted at 52 is a sending/receiving unit which sends and receives an electric wave and comprises a power amplifier, a high-frequency modulation circuit and the like, so as to communicate data to be transmitted (such as a talk signal) on a wireless basis, while denoted at 2 is an antenna which enhances the sensitivity at which the sending/receiving unit 53 sends and receives an electric wave, and in this embodiment, a ball-point pen is attached to a tip of the antenna.

Although this embodiment is directed to a structure that the ball-point pen is attached to the antenna 2 as an integral part, the structure that the ball-point pen and the antenna 2 is freely detachable is possible. For instance, the ball-point pen may be attached to a cap so that the ball-point pen gets attached to the main body of the mobile telephone 1 as the cap with ball-point pen is put in place.

Denoted at 3 is a data display part which is formed by a liquid crystal panel. The display part 3 is designed so that a displayed content is controlled by a display driving part 31. In this embodiment, the display part 3 is liquid crystals which can display in colors and a CCD 40 as well is a color imaging element, and therefore, a color image can be handled.

Denoted at 40 is the CCD which is attached to a housing of the mobile telephone 1 as an integral part, and an image capture condition for which is controlled by a reading control part 41, and there is a cylindrical lens 50 arranged in front of the CCD. A lens control part 51 controls the angle of view and the focal distance of the lens 50. The CCD 40, the reading control part 41, the lens 50 and the lens control part 51 are one example of image detecting means according to the present invention.

Denoted at 7 is a vibration-type microphone, and a microphone input control part 71 amplifies an input signal and fetches a speech signal to an internal bus not shown. The microphone input control part 71 performs pre-processing, such as to cut off a noise, for inputting of the speech signal.

Denoted at 10 are numerical keys with which a telephone number and the like are inputted. While it is possible to input a character via such numerical keys as in the case of a conventional mobile telephone, as described later, since the mobile telephone according to the embodiments has a function of recognizing a handwritten character, a character inputting function or the like may be omitted. Alternatively, the numerical keys may be entirely omitted. Denoted at 71 is a key input control part which passes an entry via the numerical keys 10 to the signal line 100, and realizes a function of key pad lock (prevention of inadvertent power turn-on when the mobile telephone is kept inside a pocket or the like) , etc.

Denoted at 58 is a personal handwriting memory part. In the embodiments, an MRAM is used. Since an MRAM, although being a non-volatile memory, does not lose information even in outer space or the like, an MRAM is convenient to be used as the personal handwriting memory part 58. Denoted at 72 is a writing control part which restricts writing to the personal handwriting memory part 58, and as a certain secret control signal is supplied to the writing control part 72, the writing control part 72 makes writing possible. As to the secret control signal, since the secret control signal can be analyzed from this patent specification, a specific example of the secret control signal will not be described.

Denoted at 59 is a handwriting matching part which compares and matches handwriting data which is information regarding inputted handwritten characters against handwriting data which is unique to a user and stored in advance in the personal handwriting memory part 58, and judges whether the handwriting is user's. For an algorithm for the judgment, DP matching with a neural network, or the like may be used, which is a memory which performs matching while weighting parts where a characteristic quantity of the handwriting data exists.

Denoted at 60 is a handwriting characteristic quantity extracting part which is means of detecting a motion vector from image data read out from the CCD 40 and extracting a characteristic quantity of a character which is being inputted. The handwriting characteristic quantity extracting part holds characteristic patterns to a certain extent stored in advance, generates a combination of the characteristic patterns and creates a handwriting characteristic quantity.

Denoted at 61 is a character recognizing part, being means which judges what a character just inputted is from a handwriting image inputted through the CCD 40 or the handwriting characteristic quantity generated by the handwriting characteristic quantity extracting part, and stores handwriting data of characters up to JIS level-2 of kanji set. The handwriting characteristic quantity extracting part 60 and the character recognizing part 61 correspond to recognizing means according to the present invention.

Denoted at 63 is a video memory which temporarily stores entries via the CCD 40 and performs image processing, while denoted at 64 is a read-only memory which stores an operation of the mobile telephone 1 as a program. Denoted at 65 is a battery which supplies power source to the mobile telephone 1 as a whole, and an Li polymer battery is used as the battery 65. Denoted at 61 is a battery control part which realizes functions of charging up the battery 65, temperature characteristic control, prevention of excessive discharging, prevention of explosion and the like (BMS battery management system).

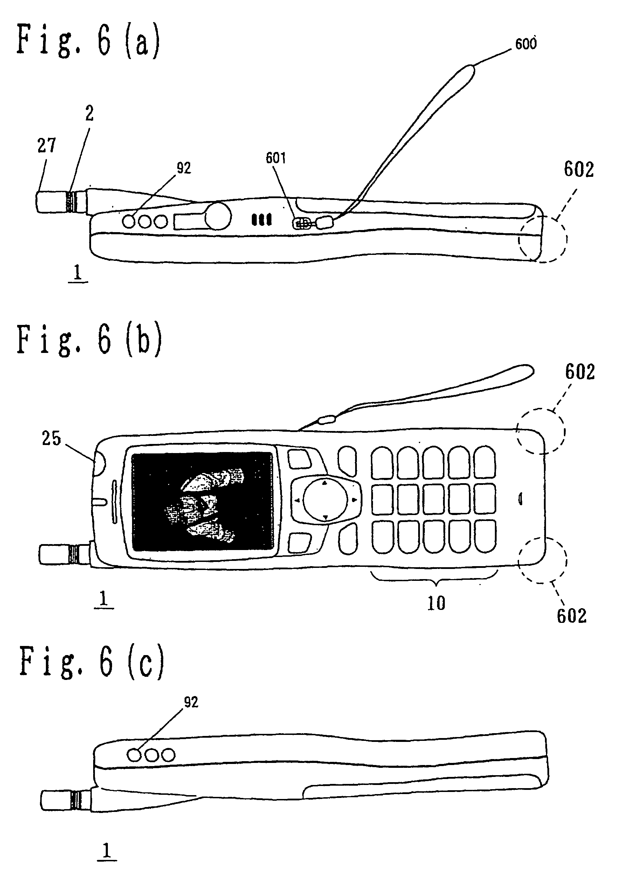

Denoted at 92 is a finger pressure detecting sensor which senses the pressure of a finger when the mobile telephone 1 is used as a writing tool, and is formed by a piezoelectric sensor element in which a piezoelectric sensor is incorporated in rubber. As shown in Figs. 6(a), (c), there are three finger pressure detecting sensors on each side surface of the mobile telephone 1. The finger pressure detecting sensors 92 may be deleted in this structure, in which case the structure is advantageously simplified.

Fig. 6 is an appearance view of the mobile telephone 1 according to the embodiments, in which a strap 600 is attached to a strap attachment hole 601. The strap attachment hole 601 is formed in the vicinity of the center of the mobile telephone 1 in such a manner the strap 600 will not be captured by the camera part 50 during a writing action.

Operations of the mobile telephone according to the first embodiment of the present invention having such a structure above will now be described.

Fig. 1 shows a state of use of the mobile telephone according to the first embodiment of the present invention with which signature authentication is possible. As shown in Fig. 1, when one is to put his or her signature on a contract 100 using the mobile telephone according to the first embodiment as a writing tool, one holds the mobile telephone 1 upside down.

Following this, one writes his or her signature on the contract 100 using the antenna 2 of the mobile telephone 1 as a neb.

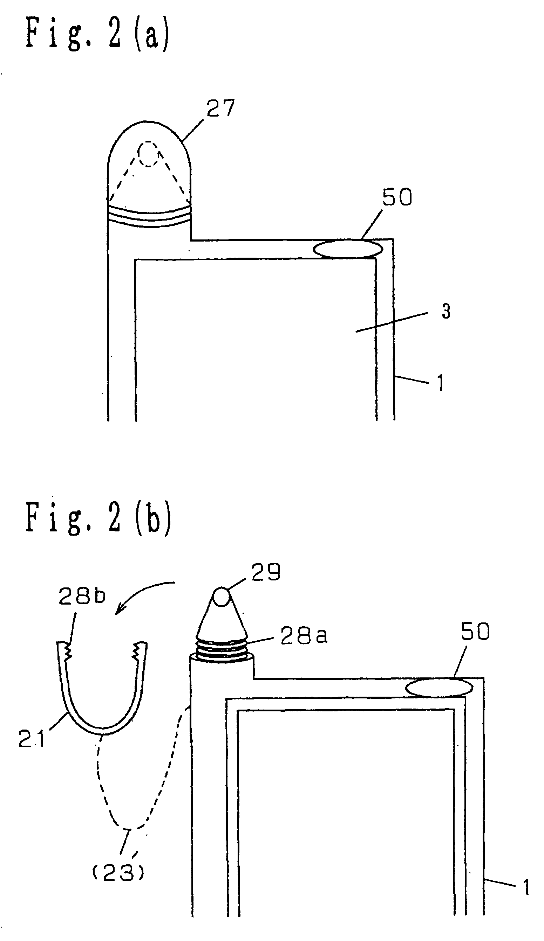

As shown in Figs. 2(a), (b), a ball-point pen 27 is attached to the tip of the antenna 2 of the mobile telephone 1, and when no writing action is made, a cap 21 is fixed by means of screw parts 28a, 28b so as to cover a neb 29 of the ball-point pen 27.

When a writing action is to be made, the cap 21 is removed to expose the neb 29 and the ball-point pen 27 is used as a writing tool. At this stage, the cap 21 may be tied with the main body of the mobile telephone 1 with a string or thin string-like something 23' so that the cap 21 will not be lost. This can make a user imagine (associate with) that the tip portion of the antenna 2 of the mobile telephone 1 can be used as a writing tool. Although the neb 29 is that of a ball-point pen according to the first embodiment, a writing portion of the present invention is not limited to this but may be realized with a fountain pen, an ink pen such as a felt pen, a knock-type mechanical pencil, etc. Further, the string 23' may be of nylon or cotton or may be a metallic wire, a twisted wire or others as far as the string can keep the cap 21 and the main body of the mobile telephone 1 connected with each other, and thus, is not limited to any specific structure.

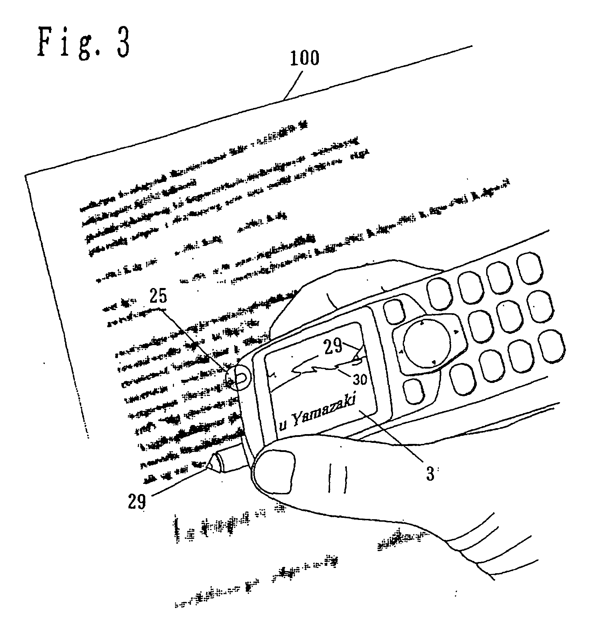

Fig. 3 is an enlarged view showing a state of use (Fig. 1) of the mobile telephone according to the first embodiment.

As shown in Fig. 3, a camera part 25 which uses a CCD is attached to the mobile telephone 1 according to the first embodiment.

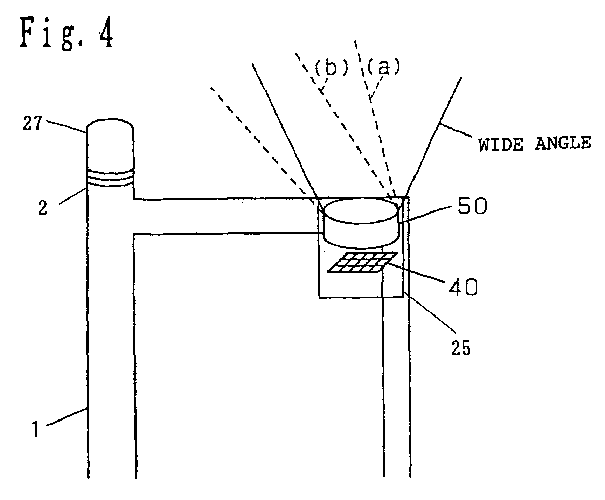

The camera part 25, as shown in Figs. 1 and 4, comprises the CCD 40 and the lens 50 which guides an optical signal representing an acquired image area into the CCD 40. Fig. 4 shows this structure.

As shown in Fig. 4, the lens 50 is a lens having a cylindrical shape whose focal distance and angle of.view can be adjusted. For a normal call, that is, when one does not make an action of writing a character, the lens 50 serves as a wide angle lens so that an image can be captured at an angle of view denoted at the solid line in Fig. 4.

When capturing an image in such a wide angle state, the lens can capture a portrait as shown in Fig. 6(b) for example. Fig. 6(b) however is a drawing which shows a person that is imaged within the display plane 3 of the mobile telephone 1.

On the other hand, for a writing action as that when one signs, the angle of view of the lens 50 is as denoted at the dotted line in Fig. 4 and can be changed so that imaging with the neb 23 is captured (dotted line (b) in Fig. 4).

Alternatively, the angle of view can be changed to such an angle which allows image capturing of a character that was already written instead of capturing the neb 23 (dotted line (a) in Fig. 4).

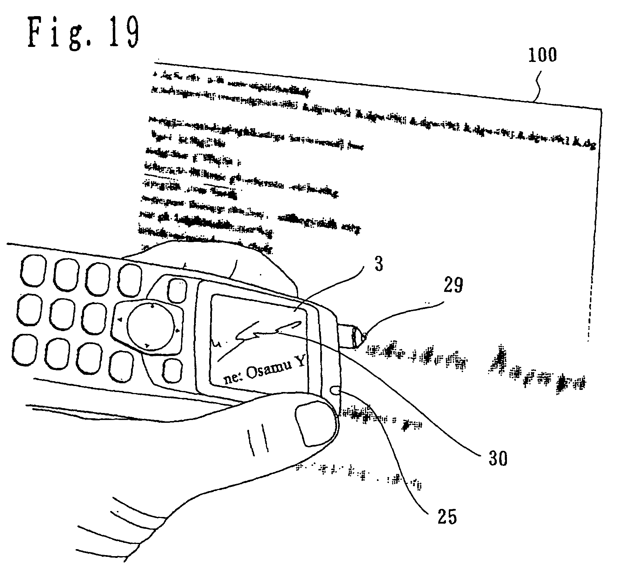

When one has made a writing action like signing with the mobile telephone 1 according to the first embodiment which comprises the camera part 25, as shown in Fig. 3, the display part 3 (which may be any one of a liquid crystal panel, an EL element and a plasma element but is most preferably a liquid crystal in terms of cost) shows the neb 29 and the handwriting 30 of the signature which has been made. While the direction of an image shown in the display part 3 may be switched upside down as shown in Fig. 19 when a left-handed person makes a writing action with the mobile telephone 1 according to the first embodiment held in his or her hand, the camera part 25 is disposed in such a manner that a hand or the like of the user who is holding the mobile telephone 1 will not be captured for such a situation. Two or more camera parts 25 may be disposed which are independent of each other and whose directions are set up for a left-handed person and a right-handed person.

According to the first embodiment, the image of the handwriting 30 is analyzed, whether this signature is truly handwriting of a person who is supposed to sign is judged, and the reliability regarding this signature improves.

This operation is realized in the following manner. The image of the handwriting 30 captured through the camera part 25 as described above is used as an input, and motion vectors are detected from this image which represents the handwriting.

For calculation of the motion vectors of the input image, the handwriting 30 can be detected as handwriting data formed by the characteristic quantities of the motion vectors, from changes in pixel value of the neb 23 and a surrounding area of 10×10 = 100 pixels for instance. The setup to use pixel values is merely an example, and various values may be used depending on a condition.

Other structure to detect handwriting by a user may be as follows. The CCD 40 of the camera part 25 captures images of an object as a series of moving pictures, changes of a predetermined constant portion in each frame of the captured images are detected as motion vectors, the movement based on the motion vectors of the images is calculated inversely, and the movement of the neb 23 is detected. The detection of the movement is performed based on similar principles to those regarding image stabilizing correction which is used for a video camera for instance.

Since this structure eliminates the necessity for the CCD 40 to capture the handwriting 30 actually written on a paper, as a user merely makes an action that resembles writing as if the tip portion of the antenna 2 was a pen, handwriting data unique to the user is obtained. In this case, it is desirable that the camera part 25 is directed toward an object including a predetermined portion which allows to detect movement and changes of the object as information within an image, instead of toward a white paper or uniform space in which there are no change in background.

In this manner, the mobile telephone according to the first embodiment can be applied as a handwritten character inputting apparatus which permits entry of a character by means of handwriting of a user.

To be more specific, as handwriting data, the handwriting characteristic quantity extracting part 60 stores mainly motion vectors of an image in a handwriting data memory part 62, from image data inputted through the CCD 40 which is shown in Fig. 5. The handwriting data memory part 62 is formed by a DRAM. If this is replaced with an MRAM which is a non-volatile memory, it is possible to deal with running out of power in the middle of an operation.

The handwriting data temporarily recorded in the handwriting data memory part 62 are matched against personal handwriting learned and stored in advance, and it is judged whether the written signature is truly handwriting of a person who is supposed to sign.

The personal handwriting memory part 58 stores personal handwriting. The personal handwriting memory part 58 is formed by a non-volatile memory, and owing to control by the writing control part 72, can not be easily written over. For the purpose of achieving legitimate and highly reliable signature authentication according to the first embodiment, the handwriting data stored in the personal handwriting memory part 58 must never be rewritten easily or deleted.

Hence, this non-volatile memory may be a memory which accepts writing only once or a memory which accepts at most only a restricted number of writing.

By the way, it is usually unknown which user will purchases the mobile telephone at the time of sale of a mobile telephone, and therefore, it is difficult to input personal handwriting data at the time of sale (at the time of production) of the mobile telephone.

Noting this, the writing control part 72 imposes a restriction upon storage of personal handwriting data in the personal handwriting memory-part 58. More specifically, unless the certain secret control signal is provided, writing in the personal handwriting memory part 58 is impossible.

The secret control signal is managed under strict confidentiality only by a manufacturer, a service provider or the like.

As described above, the mobile telephone according to the first embodiment can be easily used as a writing tool or a handwritten character inputting apparatus, and with respect to a signature writing action, realizes a signature authentication method which makes it possible to judge whether signature belongs to a person who is supposed to sign.

The following may be examples of use of thus detected authenticity of the signature authentication operation by means of the signature authentication method according to the present invention.

(a) When an applicant is to fill in an application form which requires to confirm the identity of himself or herself, e.g., an application form for a credit card, the applying person is obliged to fill in using this mobile telephone.

The example of use for such a situation is as follows.

First, when one is to make a writing action using the mobile telephone according to the first embodiment, since the display part 3 of the mobile telephone 1 shows a message reading, "Please write your signature after pressing the signature button," one writes his or her signature after pressing a signature button which is among the numerical keys 10 or separate from the numerical keys 10. This message may be communicated to the user as speech.

Next, after the action of writing the signature, if the mobile telephone 1 confirms, by means of operations of the handwriting matching part 59 and the like, that the signature is of the authentic user, nothing will happen.

However, when the mobile telephone 1 fails to confirm that the signature is of the authentic user, the mobile telephone 1 issues a warning since there is a possibility that the conduct of writing the signature is perjury. The issuance of the warning may be production of loud sound or issuance of a message which reads, "Matching of the signature has failed."

Alternatively, when a wrong signature is written, chances are that a third party has obtained the mobile telephone, a management center which manages communications and the like may be secretly notified of this so that the mobile telephone will be managed.

(b) When signature is written in a remote place

It is normal that parties to an agreement executes the agreement in a face-to-face meeting, and in such a case, the parties can visually determine in an easy manner whether the other side persons writing signatures are persons who should write signatures.

However, in the event that the parties who are in mutually remote places must execute the agreement for some unavoidable reason, in some cases, one party writes his or her signature first and sends the agreement to the other side as a registered mail so that the other side writes his or her signature on the agreement which already bears one signature and the agreement is accordingly completed. In such a case, it is relatively easy for a third party to forge a signature and execute the agreement.

Noting this, when the parties do not write signatures on the agreement in a face-to-face meeting, writing of signatures using the mobile telephone 1 according to the first embodiment is required.

Further, as an evidence of writing the signature, one records moving picture data showing himself or herself writing the signature on the agreement and sends the data to the other side, whereby the reliability of the signature improves.

### (Second Embodiment)

A second embodiment of the present invention requires to dispose pressure detecting means which is mechanical detecting means as the means of detecting handwriting data, instead of using a CCD camera used in the first embodiment.

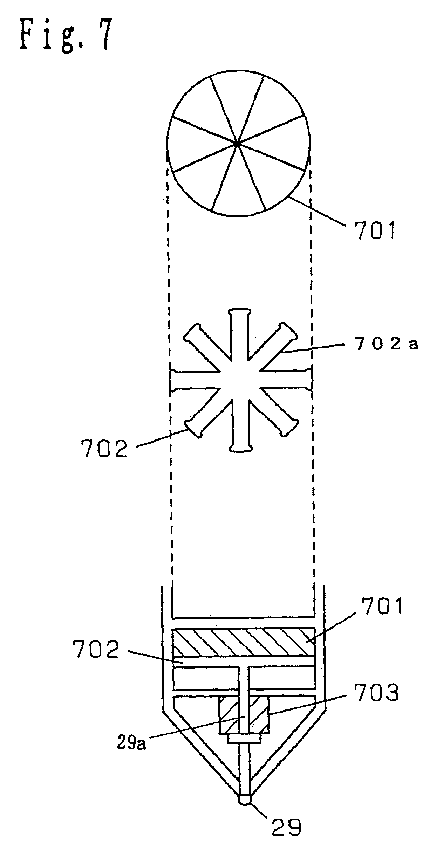

Fig. 7 shows a structure of a detection part of detecting handwriting data made with the mobile telephone according to the second embodiment of the present invention.

As shown in Fig. 7, the mobile telephone according to the second embodiment comprises a ball-point pen shaft 29a extending from the neb 29 which is used as a writing tool, a pressure sensor 701 of detecting the writing force during writing, and a neb movement detection member 702 which is disposed to be approximately coaxial to the pressure sensor 701. The pressure sensor 701 is a pressure sensor made of ceramic such as PZT (lead zirconate titanate) and detects the pressure upon the neb 29. Denoted at 703 is a writing force sensor of detecting the writing force applied upon the neb 29 at a high accuracy, in which electrodes which lead electric charges created by pyroelectric effect are disposed on an outer side surface and an inner side surface of a piezoelectric element having a cylinder shape, and the writing force sensor is structured so that shear force develops electromotive force as piezoelectric conversion is executed at a high accuracy.

The shape of the neb movement detection member 702 viewed from above is formed by a very thin stainless plate which is spread out in eight directions as shown in Fig. 7, and the pressure applied upon the eight branches is transmitted to the pressure sensor 701. The direction of the pressure applied upon the neb 29 in three dimensions is detected through the ball-point pen shaft 29a, and a neb movement detection part 711, using an output from the pressure sensor 701, analyzes the direction and the size of the applied pressure and detects the movement of the neb 29 as handwriting data.

A material which does not contain lead is preferably used as the pressure sensor 701, for an environmental reason. Although the neb movement detection member 702 may have any desired number of branches, e.g., three, four, six, ten, twelve or sixteen branches, instead of eight branches in accordance with the detection accuracy, three branches are necessary for detection of at least three directions.

In addition, it is desirable that the piezoelectric element of the pressure sensor 701 is divided in accordance with the number of the branches.

Meanwhile, although the pressure sensor 701 and the neb movement detection member 702 are formed by separate members from each other according to the second embodiment, these portions can be formed integral with each other by directly disposing or adhering a piezoelectric thin film to the eight branch portions (702a) of the neb movement detection member 702.

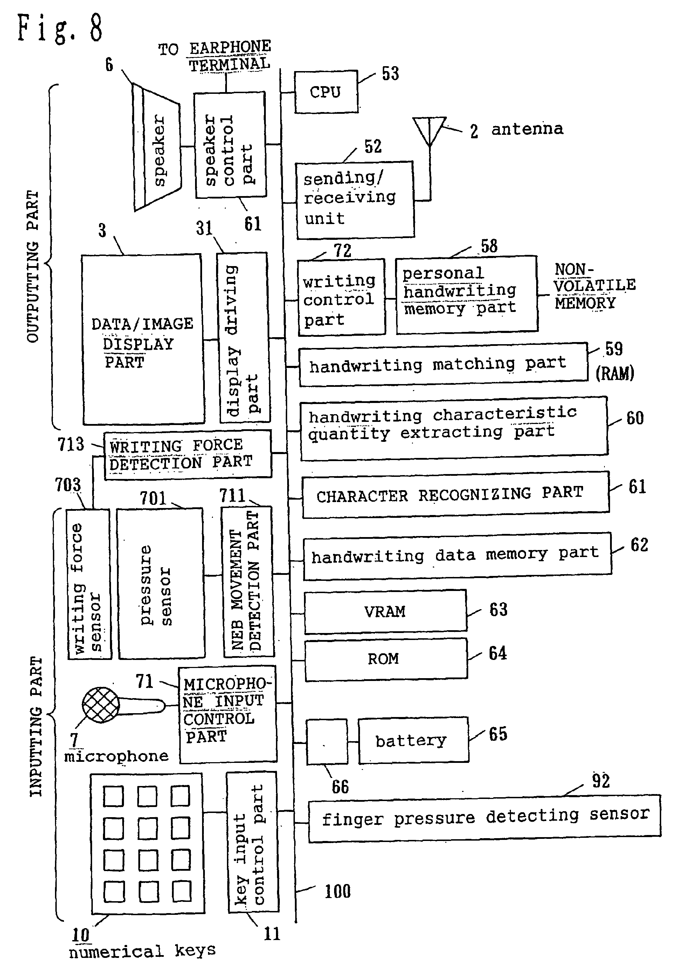

Fig. 8 shows is a block structure diagram of the second embodiment of the present invention. Instead of the CCD 40 and the lens 50 according to the first embodiment, the pressure sensor 701, the writing force sensor 703, a writing force detection part 713 and the neb movement detection part 711 are added as a structure. The other portions are similar to those according to the first embodiment. The pressure sensor 701 is formed by eight divided piezoelectric elements so as to detect the direction of the force upon the neb 29. The pressure sensor 701, the writing force sensor 703, the neb movement detection part 711 and the writing force detection part 713 correspond to the pressure detecting means according to the present invention.

In the second embodiment, writing force is detected as handwriting data based on an output from the writing force sensor 703 and this signal is processed by the writing force detection part 713, so that writing force data is obtained.

In addition, eight signal outputs are obtained from the pressure sensor 701 and processed by the neb movement detection part 711, thereby obtaining direction data.

The two pieces of data, one being the writing force data and the other being the direction data, obtained as described above are used as handwriting data in the second embodiment.

Since the second embodiment requires to use, as handwriting data, the direction of the writing force detected by the pressure sensor 701 and a quantity which is based on the size of the writing force detected by the writing force sensor 703, the volume of data to be stored is far less than that for image processing and matching against personal handwriting data is executed at a high speed, and therefore, it is possible to reduce a cost of fabricating the equipment.

Further, in a manner similar to the first embodiment, as a user uses only the ball-point pen shaft 29a as an axis for pressure detection without using the neb 29 and makes an action that resembles writing as if the tip portion of the antenna 2 was a pen while pressing the tip portion against a predetermined surface such as a paper, even without handwriting remained on the paper in reality, changes in size and direction of the force applied upon the tip portion are detected through the axis mentioned above and handwriting data unique to the user is obtained.

Although the second embodiment may be used of course for similar applications to those of the first embodiment, since the second embodiment makes it possible to detect a very small amount of pressure applied upon the neb 29 or the antenna 2, the following examples of use are additionally possible.

(c) Writing force is stored every day as writing force data, and a health condition of a user is presumed from a change in writing force and a warning is issued.

As for the way in which a warning is given, the display part 3 may show a warning message such as one reading, "You are not writing with strong force today," or the warning may be provided as speech.

In addition, when the writing force is stronger than usual, a message reading, "You are writing with strong force today," is displayed.

Moreover, utilizing the functions of the mobile telephone 1, daily writing force data may be transmitted to an external health management center via the sending/receiving unit 52 so that the writing force data will be converted into grip strength data and stored in the health management center and a warning or a recommendation regarding a medical checkup will be received from the health management center. In this process, the conversion from the writing force data into the grip strength data may be performed by the mobile telephone 1 and the grip strength data may be transmitted to the health management center in advance.

(d) Use for inspection of the water pressure in water works, inspection of the pressure of city gas or propane gas, etc.

In this case, a hole (valve) for pressure inspection is formed in a water pipe or a gas pipe, and the neb 29 of the mobile telephone according to the second embodiment is inserted into the hole.

Inspection data is sent from the mobile telephone to an electric power company or a gas service company for management. This operation may be performed by an inspector, or alternatively, by a user of an individual household.

As described above, since the mobile telephone according to the second embodiment makes it possible to detect handwriting data with the pressure sensor, an operation of signature authentication or the like is possible, and further, since the pressure sensor is added, the mobile telephone can function as a portable terminal of detecting pressure.

Although the foregoing has described that the second embodiment requires to use two piezoelectric elements, one being the pressure sensor 701 and the other being the writing force sensor 703, for detection of handwriting data, these two pressure means may be realized by the same structure. That is, writing force data to be detected by the writing force sensor 703 may be detected by the pressure sensor 701 to thereby omit the writing force sensor 703. In this case, since transmission of the writing force becomes less, the sensitivity of the pressure sensor 701 needs be enhanced by a corresponding amount.

Further, conversely to this, pressure data to be detected by the pressure sensor 701 may be detected by the writing force sensor 703 to thereby omit the pressure sensor 701.

### (Third Embodiment)

A third embodiment of the present invention is an example that three-dimensional motion sensor based on the principles of gyro is used as means of detecting movement of the neb 29.

The three-dimensional motion sensor may be a vibration-type gyro which detects a change of the gyro itself as the gyro moves because of vibration of a piezoelectric member, or an optical fiber gyro which detects movement of the gyro itself utilizing interference of light inside an optical fiber. Alternatively, other types of gyro may be used instead.

According to the third embodiment, a three-dimensional vibration-type gyro disposed to three axes of yaw, roll and pitch is used as the three-dimensional motion sensor.

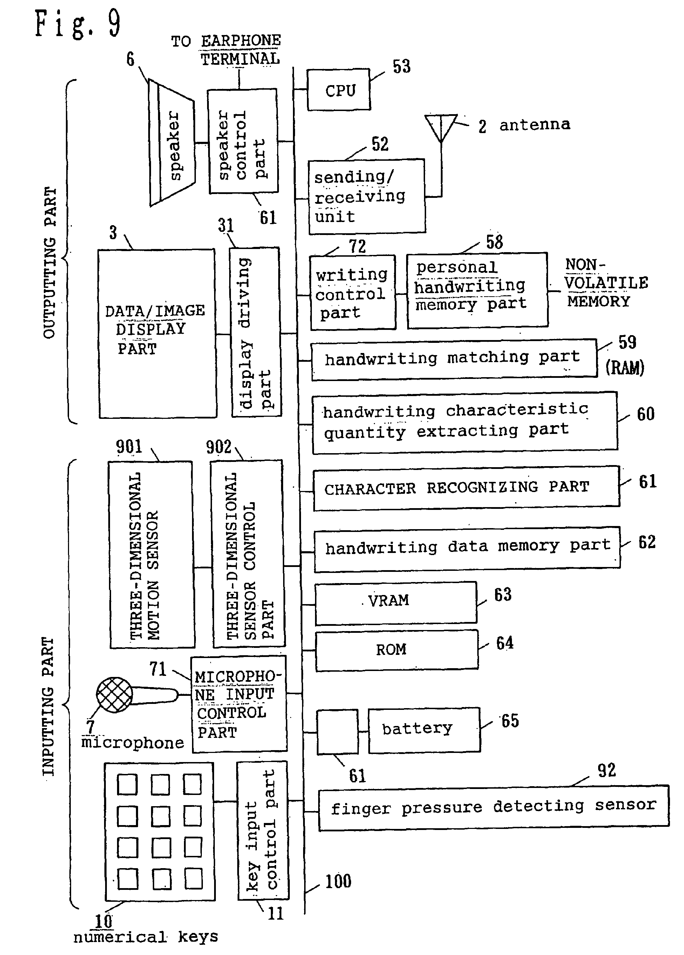

Fig. 9 is a structure view of the third embodiment. Instead of the CCD 40 and the lens 50 according to the first embodiment, the three-dimensional motion sensor 901 and a three-dimensional sensor control part 902 are added as a structure. The other portions are similar to those according to the first embodiment. The three-dimensional motion sensor 901 and a three-dimensional sensor control part 902 corresponds to a gyro according to the present invention.

Although operations according to the third embodiment are approximately similar to those according to the first and the second embodiments, since the third embodiment requires to detect movement of the neb 29 as movement of the mobile telephone 1 as a whole, similarly to the other example of structure according to the first embodiment, as one makes an action of signing, if not actually signing on a paper, with the neb 29 held in the air without pressing the neb 29 against a paper, detection is possible as in the case of signing, and thus, a gestured signature can be used.

Further , the third embodiment is advantageous in that a habit in an actual writing action (to what extent one inclines a pen to make a signing action, how fast one makes a writing action) is easily grasped.

In the third embodiment, the three-dimensional motion sensor 901 which is a three-dimensional vibration-type gyro detects movement of the neb 29, and matching against personal handwriting data is executed using the resulting three-dimensional movement data or character recognition is executed from the three-dimensional movement data and a character is thus inputted. At this stage, the three-dimensional motion sensor 901 is driven by the three-dimensional sensor control part 902 while being processed through noise removal or the like.

Since the mobile telephone has a structure comprising a three-dimensional motion sensor (gyro) according to the third embodiment, the following examples of use are possible.

(e) Use as a high-accuracy calorie consumption calculator (pedometer).

(f) Use as a navigation apparatus.

(g) When a user is a left-handed person, since writing movement is with a left arm, the fact that the user is a left-handed person is known from an output from the three-dimensional motion sensor, and therefore in this case, the displaying method of the display can be traversed as shown in Fig. 19 so as to make it easy for a left-handed person to look at.

(h) A back signature (a normal signing action viewed from the back side) is used to further improve security.

That is, although one signs with a neb directed to below when he or she goes through a normal authentication operation, when a message reading, "Please make a back signature," is issued, he or she holds a pen in an opposite direction to that for a normal signing action and makes a writing action, whereby back signature data is obtained which is a mirror reflection of a signature which results from a normal signing action. As the back signature data and front signature data (normal authentication signature data) are used for matching as a pair, security largely improves.

### (Fourth Embodiment)

A fourth embodiment is directed to an example which comprises both the camera part used in the first embodiment and the three-dimensional motion sensor used in the third embodiment.

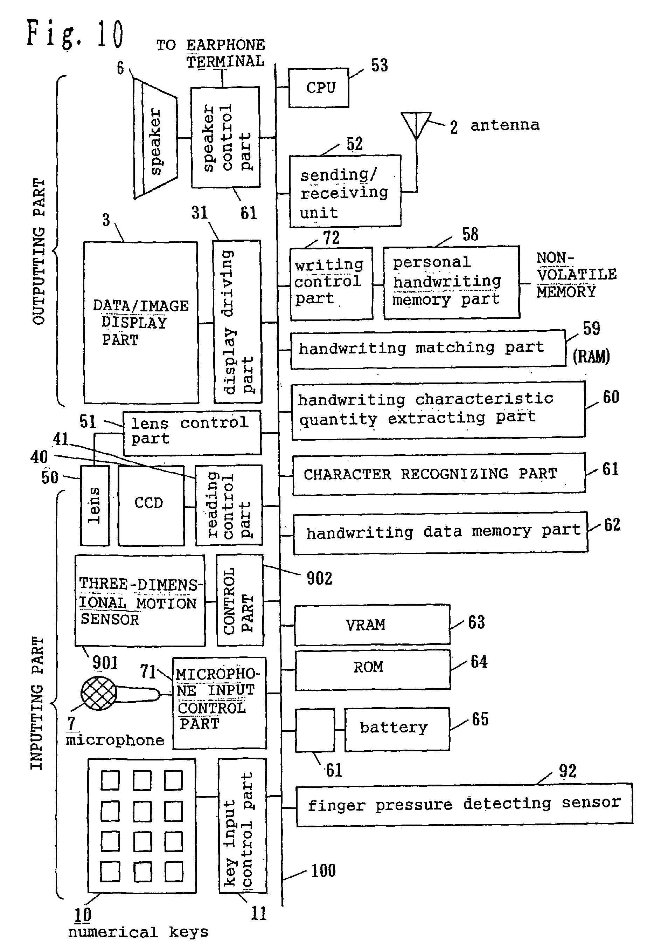

Fig. 10 shows a structure according to the fourth embodiment.

Thus, use of the CCD 40, the three-dimensional motion sensor 901 and other cooperating structure improves the accuracy of detection or handwriting and makes the authentication operation more reliable (robust against fraudulence).

### (Fifth Embodiment)

A fifth embodiment aims at further improving security during the authentication operation using the mobile telephone according to the fourth embodiment.

The fifth embodiment allows to grasp a habit which a user of the mobile telephone according to the fourth embodiment shows when he or she holds a writing tool, and accordingly further improves the accuracy of personal authentication.

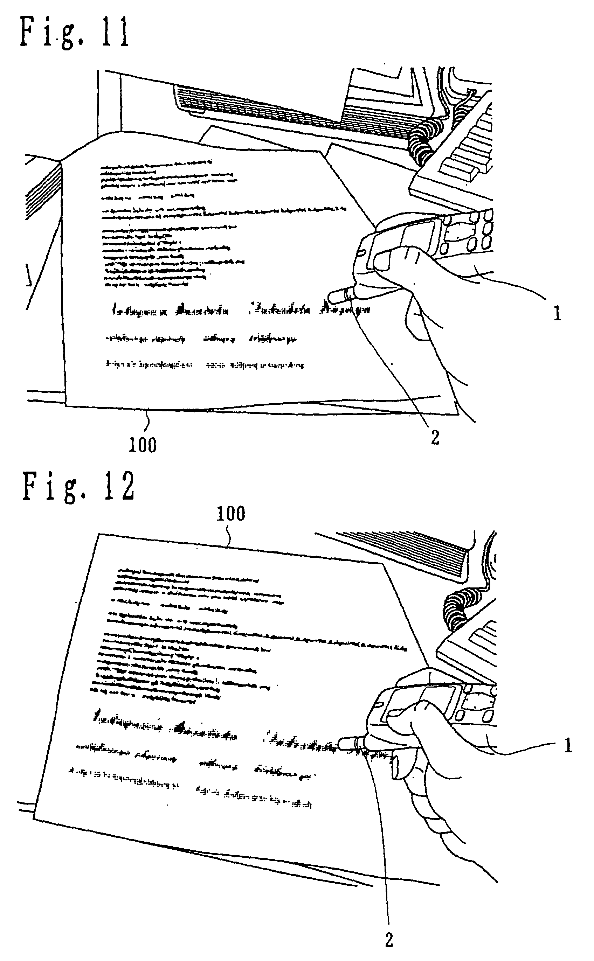

When a user uses the mobile telephone according to the present invention, as shown in Figs. 11 through 13, different users hold mobile telephones differently. Noting this, the finger pressure detecting sensors 92 which are shown in Fig. 6 detect a holding habit of a user.

As for a holding habit, a characteristic point is extracted from time series storage of data regarding a pressure signal from the finger pressure detecting sensors 92 (While there are six disposed in the fifth embodiment as shown in Fig. 6, the more disposed, the better the accuracy becomes. However, it is desirable that there is at least one disposed each above and below and at least one disposed each on each side surface of the mobile telephone 1.), whereby the holding habit is grasped.

With such a holding habit registered in advance in the personal handwriting memory part 58, identification of the authentic user is possible.

The holding habit may be registered in advance, or alternatively, the mobile telephone 1 may learn about the holding habit while a user uses the mobile telephone 1.

### (Sixth Embodiment)

A sixth embodiment aims at further improving security during the authentication operation using the mobile telephone according to the fourth embodiment, which is similar to the fifth embodiment.

The sixth embodiment allows to grasp a habit of a user of the mobile telephone 1 regarding an angle at which he or she holds a writing tool, and accordingly further improves the accuracy of personal authentication.

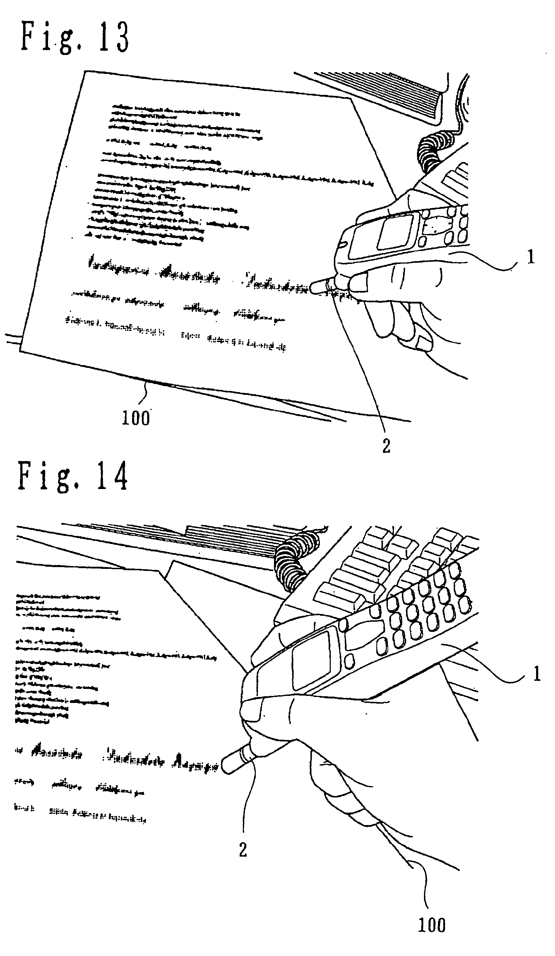

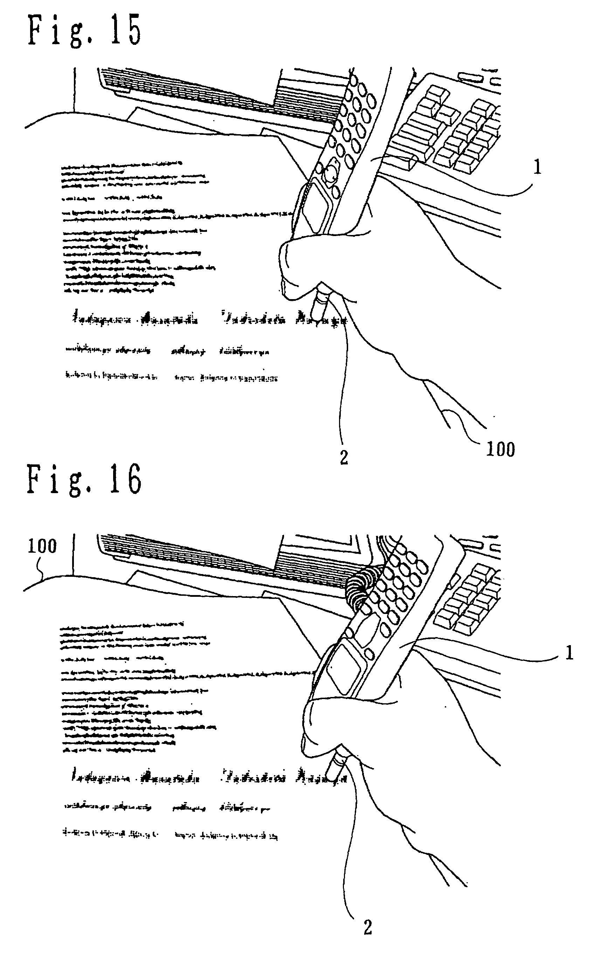

In short, when a user uses the mobile telephone 1 according to the fourth embodiment of the present invention, as shown in Figs. 14 through 16, different users write differently and the angle of the mobile telephone 1 accordingly changes depending on a condition of writing.

With respect to the habit regarding the angle of holding a pen, the three-dimensional motion sensor 901 detects a behavior of the pen (the antenna 2 comprising the pen), and the habit regarding the angle of holding the mobile telephone 1 which serves as a pen is grasped.

With the habit regarding the angle of holding a pen during writing registered in advance in the personal handwriting memory part 58, whether the current user of the mobile telephone 1 is the person originally registered can be determined.

The habit regarding the angle of holding a pen may be registered in advance, or alternatively, the mobile telephone 1 may learn about the habit of holding a pen while a user uses the mobile telephone 1.

### (Seventh Embodiment)

A seventh embodiment aims at further improving a character recognition rate for character recognition using a mobile telephone which comprises the CCD 40 according to the first embodiment or the like.

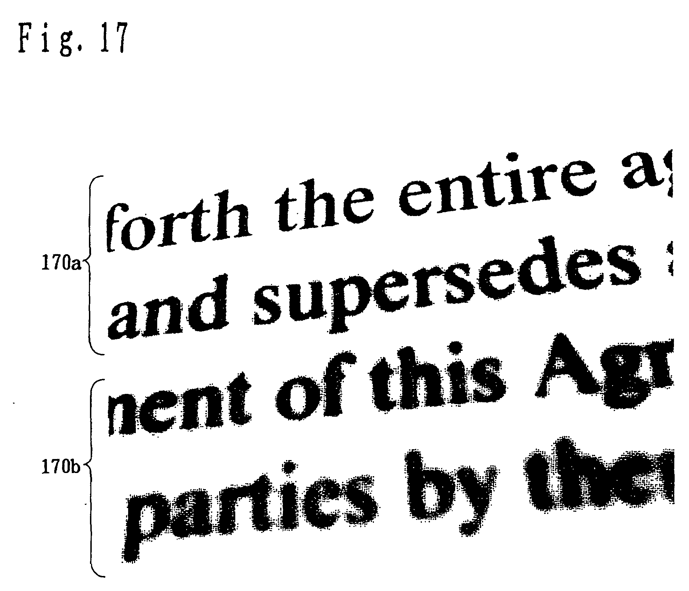

When characters on a writing surface are actually captured using the mobile telephone according to the seventh embodiment, as schematically shown in Fig 17, among characters captured by the camera part 25, there are a portion 170a with a relatively good focus and a portion 170b which shows out of focus.

The seventh embodiment eliminates such an inconvenience.

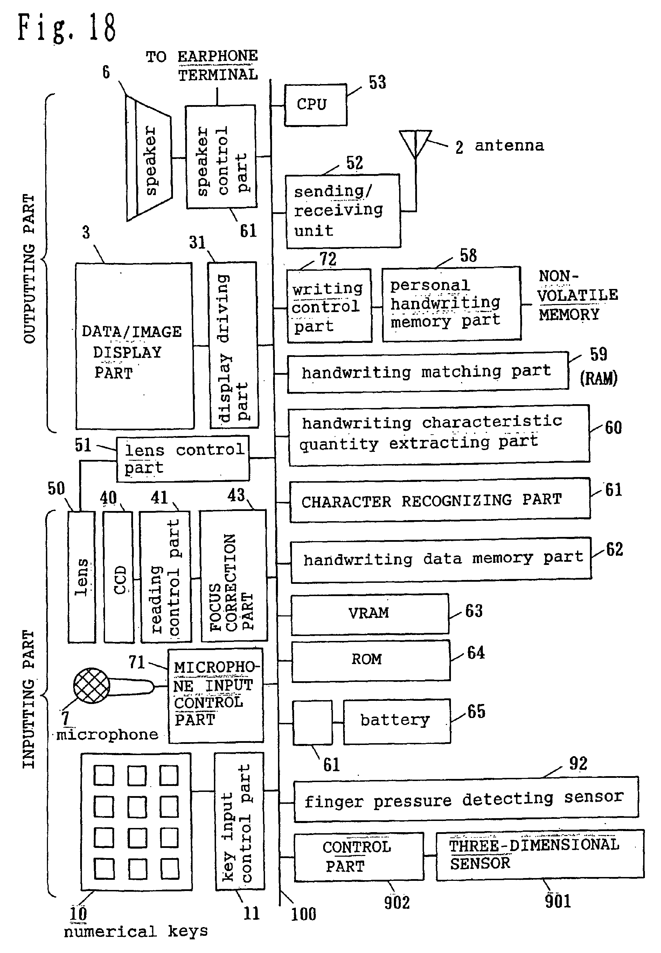

Fig. 18 is a structure view of the seventh embodiment. In Fig. 18, although an image signal accepted through the CCD 40 is inputted using the reading control part 41, whether focusing is correct or not is corrected by a focus correction part 43.

The function of the focus correction part 43 may be realized with detection of a pen holding angle by the three-dimensional sensor control part 902 in the fourth embodiment.

### (Eighth Embodiment)

An eighth embodiment aims at further improving security during the authentication operation using the mobile telephone according to the present invention.

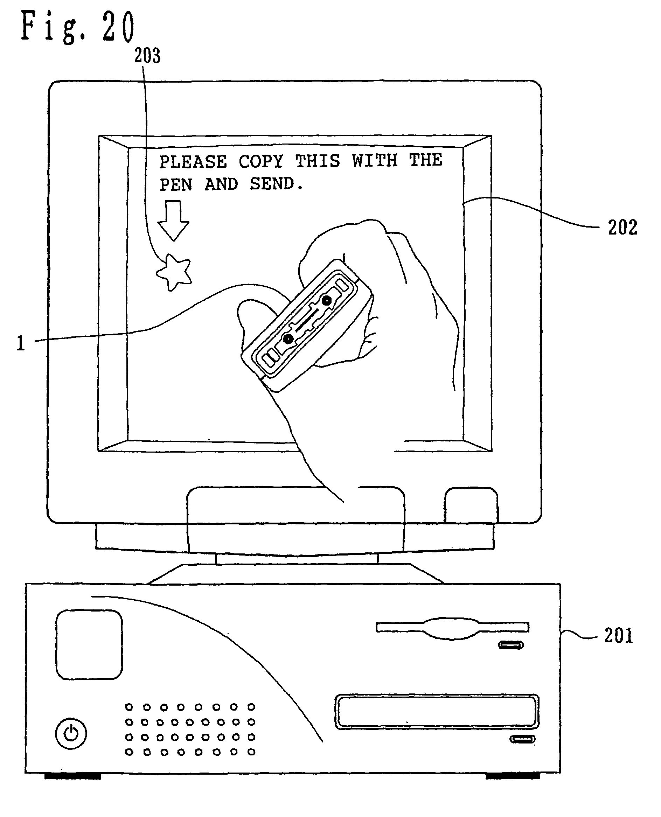

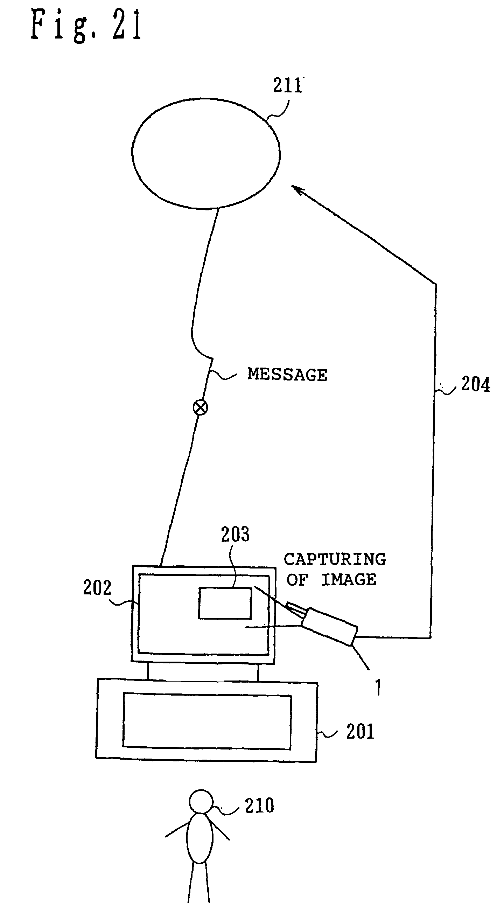

Figs. 20 and 21 schematically show examples of use according to the eighth embodiment.

That is, according to the eighth embodiment, as shown in Fig. 20, in the case of electronic commerce transaction using a personal computer and the like, for the purpose of improving the accuracy of authentication of a personal computer 201 which is used for settlement, first, a display 202 displays some graphic form (character), the graphic form (character) 203 is then captured with the mobile telephone 1 according to the eighth embodiment, and the captured image data is thereafter sent to a transaction partner using a communication function of the mobile telephone 1, so that the authentication operation is made further reliable.

Referring to Fig. 21, specific examples will now be described. A purchaser 210 manipulating the personal computer 201 gets connected to a shopping mall 211, finds a desired product, buys the product and settles a bill. At this stage, the shopping mall 211 issues a message 211, reading "Please copy this with the pen and send," and designates an authentication operation (captures the graphic form (character) 203 shown on the display 202 and sends thus obtained data) . Since the purchaser 210 of the product must follow the instruction regarding the authentication operating designated by the shopping mall 211, an authentication signal (authentication ID 204) generated through the authentication operation contains information representing the capturing condition (image quality, angle of view, etc.), and the authentication signal is therefore extremely unique and dramatically improves security of the electronic commerce transaction.

When the shopping mall 211 authenticates the purchaser 210, as a way of facilitating the authentication operation (designating the authentication operation), a mark shown to the purchaser 210 may be changed every time, or the authentication operation itself may be made complex by presenting a message-to-be-sent, reading "Please double-click this twice with the authentication pen," which realizes strong resistance against attack by a hacker, cyber terror, etc.

The display 202 which displays the graphic form (character) 203 for authentication is not limited to a screen of a personal computer, but may be anything that displays the mark at a certain resolution, such as a display attached to a telephone and a large-size display on the street.

As described above, according to the eighth embodiment, the authentication mark which constantly changes with time is captured from the shopping mall, and in addition, data unique to a user such as handwriting data and writing force data can be sent to the shopping mall, and hence, it is possible to prevent an accident due to "disguise" at the time of purchase.

### (Ninth Embodiment)

A ninth embodiment assumes a situation that one buys a concert ticket, an airplane or train ticket, or the like using the mobile telephone according to the present invention.

A purchaser of a ticket buys a concert ticket, for instance, in a ticket mall that sells a pass to a concert, a ticket for transportation such as airplanes and trains, and the like. At this stage, a graphic form (character) is shown on a display which is installed in the ticket mall for the purpose of an authentication operation, and this graphic form (character) may be used as a ticket itself.

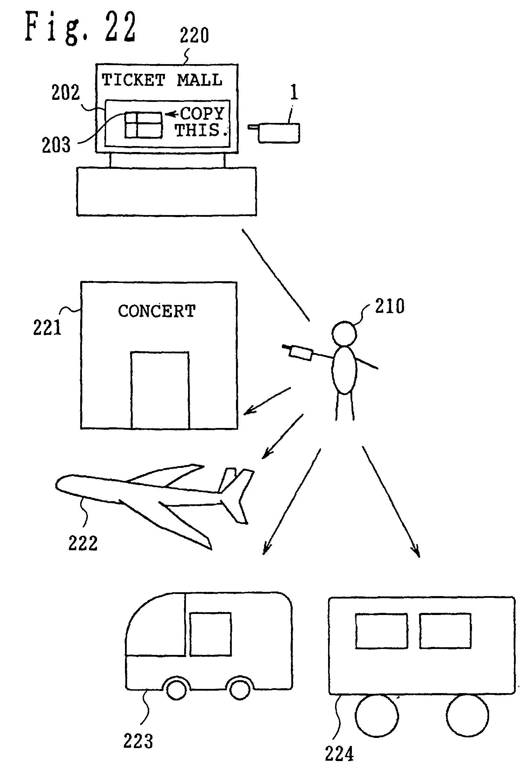

Fig. 22 illustrates this example. The purchaser 210 of the ticket, as the authentication operation, captures an authentication mark 203a displayed by the display 202 in the ticket mall and sends it together with personal authentication data regarding himself or herself to the ticket mall, thereby finishing settlement. At the same time, since the authentication mark also serves as ticket data, the mobile telephone 1 itself comprises the ticket purchased in the ticket mall.

The purchaser 210 of the ticket, merely bringing his or her mobile telephone 1 with him or her, can pass through a gate for a concert 211, or get on an airplane 222, a bus 223, a train 224, etc.

Thus, while the foregoing has described that according to the first through the ninth embodiments of the present invention, the signal unique to a person is detected using the camera part 25 comprising the CCD camera 40, the finger pressure detecting sensors 92, the three-dimensional motion sensor 901 and the writing force sensor 703 and the authentication operation is executed, for detection of personal unique data, a fingerprint sensor which detects a fingerprint may be disposed in an upper portion of a liquid crystal display apparatus 3 and may detect a fingerprint, and this may be stored as it is associated with handwriting data.

Alternatively, the finger pressure detecting sensors 92 may detect a pulse flow, or a ultrasonic transducer may be disposed to detect a blood flow utilizing the Doppler effect and blood flow data may be used for authentication.

In addition, while a mobile telephone comprising a camera is in a wide use, the function according to the present invention may be added on later, and the function can be realized with a program downloaded to the mobile telephone via a wired/wireless communication network.

Hence, although the foregoing has described the mobile telephone according to the embodiments of the present invention, the present invention may be a program which operates in co-operation with a computer and which makes the computer execute all or some means among the motion detecting means and the recognizing means according to the present invention described above.

Further, the present invention may be a data structure which is used by all or some means among the motion detecting means and the recognizing means according to the present invention described above, in co-operation with a computer.

In this context, some means (or apparatuses, elements, circuits, parts, etc.) according to the present invention refers to some means or steps in these plurality of means, or some functions or some operations in one means.

Further, some means (or elements, circuits, parts, etc.) according to the present invention refers to some apparatuses in these plurality of apparatuses, or some means (or elements, circuits, parts, etc.) in one means, or some functions in one means.

The present invention also covers a recording medium which stores a program according to the present invention and can be read on a computer.

In one example of use, the program according to the present invention may be recorded in a recording medium which can be read on a computer so that the program operates in co-operation with the computer.

In one example of use, the program according to the present invention may be transmitted through a transmission medium and read by a computer so that the program operates in co-operation with the computer.

The data structure according to the present invention includes a database, a data format, a data table, a data list, a data type, etc.

The recording medium includes a ROM, etc., whereas the transmission medium includes a transmission medium such as the Internet, light, an electric wave, a sound wave, etc.

As described above, the structure according to the present invention may be realized by software or hardware, and when a program having this function as an additional function is set as a program for which term of use is limited and a charge is imposed for every downloading, it is possible to charge for an accurate beneficiary's burden for the additional function.

While the foregoing has described the embodiments of the present invention in relation to an example of a mobile telephone which is used in a cordless state, a power source code may be used, and the present invention is applicable to a wired telephone as long as the telephone can be used as a terminal. Further, the portable terminal according to the present invention may be realized as an electronic organizer, an information processing apparatus having a scheduler function, etc. In this case as well, a user can always carry it as in the case of a mobile telephone, which improves the convenience.

In addition, the portable terminal according to the present invention may be realized as a remote controller such as home electric appliance and audio visual equipment. When the present invention is applied to a remote controller, it is possible to improve security for operations of home electric appliance, audio visual equipment or the like utilizing the signature authentication method according to the present invention. Further, the present invention is also applicable to a portable terminal which has all or some of functions of a mobile telephone, an information processing apparatus and a remote controller.

While the foregoing has described each embodiment requires that a writing action is made with the antenna of the mobile telephone as a neb, or with the antenna as if the antenna were a neb, a portion which serves to detect movement of the portable terminal according to the present invention is not limited to an antenna. For example, conversely to the embodiments, the mobile telephone 1 may be held in a forward direction, a bottom portion 602 shown in Fig. 6 may comprise image detecting means or pressure detecting means such as the camera part 25 and the pressure sensor 701, and a user may make a writing action as if the bottom portion 602 was a neb. As a writing portion, a writing tool such as a ball-point pen and an ink pen may be attached directly to the bottom portion 602.

Further, the image detecting means or the pressure detecting means may be disposed to the back surface (surface opposed to the surface on which the display part 3 is disposed) of the mobile telephone 1, not to the bottom portion 602. Still further, the image detecting means, the pressure detecting means or the gyro of the motion detecting means according to the present invention may be disposed to any part of the mobile telephone as far as it can detect all or some operations of the mobile telephone. Depending on a condition, more than one such means may be disposed.

### INDUSTRIAL USE

As described above, according to the present invention, a portable terminal which one highly likely carries with him or her all the time can be used as an easy-to-use writing tool or character inputting apparatus.

In addition, since it is possible to perform an authentication operation such as signing by means of the present invention, authentication at a dramatically higher level of security is possible as compared to personal authentication that utilizes only a conventional identification code.

## Claims

1. A portable terminal, comprising:
a portable terminal main body which communicates information; and
motion detecting means which detects all or some of movement of said portable terminal main body.

2. The portable terminal of Claim 1, wherein said motion detecting means comprises image detecting means,
and that said movement is detected based on an image detected by said image detecting means.

3. The portable terminal of Claim 2, wherein said motion detecting means detects said movement based on a motion vector of the image detected by said image detecting means.

4. The portable terminal of Claim 1, wherein said motion detecting means comprises pressure detecting means,
and that said movement is detected based on pressure which is applied upon the entirety or a part of said portable terminal main body and which is detected by said pressure detecting means.

5. The portable terminal of Claim 1, wherein said motion detecting means comprises a gyro.

6. The portable terminal of any one of Claims 1 through 5, comprising recognizing means which recognizes, as data representing a character or graphic form, all or some of movement of said portable terminal main body detected by said motion detecting means.

7. The portable terminal of any one of Claims 1 through 5, wherein said part of said portable terminal main body is an antenna portion of said portable terminal.

8. The portable terminal of any one of Claims 1 through 5, comprising a writing portion which is disposed to said part of said portable terminal main body and which writes a character or graphic form.

9. The portable terminal of any one of Claims 1 through 5, wherein all or some of movement of said portable terminal main body is a writing action of a user of said portable terminal.

10. The portable terminal of any one of Claims 1 through 5, wherein said portable terminal is all or some of a telephone, a remote controller and an information processing apparatus.

11. A signature authentication method
**characterized in** using, as a signature for authentication, a character or character data obtained through all or some of movement of said portable terminal main body of said portable terminal of Claim 9.

12. A program which makes a computer function as all or some of motion detecting means, which detects all or some of movement of said portable terminal main body of said portable terminal of any one of Claims 1 through 6, and recognizing means which recognizes, as data representing a character or graphic form, all or some of movement of said portable terminal main body.
